Europäisches Patentamt

European Patent Office

Office européen des brevets

(11) Publication number: **0 296 509**
**A2**

# EUROPEAN PATENT APPLICATION

(21) Application number: **88109740.6**

(22) Date of filing: **18.06.88**

(51) Int. Cl.⁴: **B60N 1/00**

(30) Priority: **25.06.87 US 66722**

(43) Date of publication of application:
**28.12.88 Bulletin 88/52**

(84) Designated Contracting States:
**AT CH DE FR GB IT LI NL SE**

(71) Applicant: **NATIONAL SEATING**
**200 National Drive**
**Vonore Tennessee(US)**

(72) Inventor: **Smith, Rodney F**
**311 White Oak Drive**
**Seymour Tennessee(US)**

(74) Representative: **Troesch, Jacques J., Dipl.-Ing.**
**et al**
**Dr. Troesch AG Patentanwaltsbüro**
**Walchestrasse 19/Postfach**
**CH-8035 Zürich(CH)**

(54) **Vehicle seat with rolling lobe fluid spring support.**

(57) A vehicle seat (1) mounted for relative vertical movement has, a rolling lobe air spring support (2). The air spring (2) includes a piston (24), a plug (26) and a flexible tubular sleeve (25) extending between and connected at its opposite ends to the piston (24) and plug (26). The piston (24) has a positively, radially outwardly tapered control surface (56) on the piston sidewall (28). The control surface (56) has a plurality of segments of different respective tapers. The positive taper of the control surface (56) has a composite radial increase in segmented steps from (58, 59, 60) to control surface end closest to the plug to the control surface end farthest from the plug. The segmented, positive taper piston control surface (56) provides a variable spring rate as the tubular sleeve lobe (37) rolls along the piston control surface (56) during spring compression caused by seat loading. The variable spring rate created by the piston control surface provides a soft feel to the seat occupant under normal load conditions and provides rapid air pressure build up in the air spring (2) during increased load conditions to slow or arrest seat movement. The positively tapered control surface provides a progressively larger piston area giving the piston (24) more lifting ability at the same pressure increases as the lobe (37) rolls down the piston (24). The pressure increases faster and the piston (24) also becomes more effective as the lobe (37) rolls down the surface as compared to a cylindrical or negative taper piston.

FIG. 2

## Vehicle Seat With Rolling Lobe Fluid Spring Support

### FIELD OF THE INVENTION

This application relates generally to a vehicle seat having a fluid spring suspension and particularly to a fluid spring having a variable spring rate tuned to the vehicle seat design.

### BACKGROUND OF THE INVENTION

The use of air springs to support and control the vertical position of a vehicle seat is well known in the art. For example, Dome U.S. Patent No. 3,298,654, assigned to the assignee of the present application, discloses the use of an air spring in a vehicle seat support.

The air springs used in vehicle seat applications normally include a piston, a plug and a flexible tubular sleeve or bellows extending between and connected at its opposite ends to the piston and plug. The piston sidewall can have a negative taper relative to the vertical as shown in Brown et al U.S. Patent No. 4,378,935. Alternatively, the piston sidewall can have a positive taper relative to the vertical as shown in Hirtreiter et al U.S. Patent No. 4,174,827 and Merkle U.S. Patent No. 4,493,481. Reference may also be had to Stein U.S. Patent No. 3,185,041; Smith U.S. Patent No. 3,375,759; McCollum U.S. Patent No. 3,767,160; Bergandy U.S. Patent No. 4,569,378 and Bouvot et al U.S. Patent No. 4,612,847 for other applications employing flexible diaphrams with pistons.

### SUMMARY OF THE INVENTION

The principal object of the present invention is to provide a vehicle seat having an air spring support or suspension with a controlled variable, progressive spring rate. The air spring includes a positively tapered control surface on the piston sidewall. The control surface has at least two segments of different angularity or taper. The number of segments of differing taper can be selected to provide a tunable progression for the spring rate relative to spring movement.

Another object of the present invention is to reduce the magnitude and number of cycles of the air spring and seat under abnormal seat loading. By employing a positive tapered piston sidewall having a plurality of segments, the pressure in the air spring under compression builds up rapidly and the effective size of the piston increases to slow down and ultimately arrest seat movement with reduced vertical travel. By arresting the seat movement more quickly, the seat support structure will normally not bottom out on the seat base to improve the feel of the seat to the occupant and to reduce abrasion for the flexible tubular sleeve. Moreover, the reduced vertical movement on compression also reduces the vertical movement on return allowing the same to be more easily controlled to one cycle. This reduced vertical movement of the compressed air spring and vehicle seat and the reduced number of cycles allows the shock absorber more easily to absorb the energy and enhances shock absorber life.

Still another object of the present invention is to provide a vehicle seat with air spring that reduces vertical movement and cycling of the seat under load conditions while providing improved feel to the occupant. By segmenting the positively tapered control surface on the piston sidewall, the air spring will provide the same soft feel to the occupant under normal seat load conditions. By reducing the amount of vertical air spring movement under abnormal or increased loads, the occupant will not experience abrupt change in direction which will result in a smoother ride with less vibration or occilation. The vehicle seat with the air spring of the present invention will provide a similar feel to occupants without regard to body weight relative to height adjustment.

The invention, then, comprises the features hereinafter fully described and particularly pointed out in the claims, the following description and annexed drawings setting forth in detail certain illustrative embodiments of the invention, these being indicative, however, of but a few of the various ways in which the principles of the invention may be embodied.

### DESCRIPTION OF THE DRAWINGS

Fig. 1 is a side elevation of the vehicle seat having a variable rate air spring mounted thereon in accordance with the present invention with the spring in a compressed condition and the seat lowered;

Fig. 2 is a partially broken away and sectioned side elevation of the seat of Fig. 1 showing the air spring expanded and sea elevated;

Fig. 3 is an elevation of another embodiment of the piston component of the air spring;

Fig. 4 is a partially broken away and sectioned side elevation of a vehicle seat utilizing the second embodiment of the piston in an air spring extending between the seat base and seat frame, with the seat elevated; and

Fig. 5 is a fragmentary view of the piston control surface utilizing a rib to create an instantaneous pressure spike.

## DETAILED DESCRIPTION OF THE PREFERRED EMBODIMENT

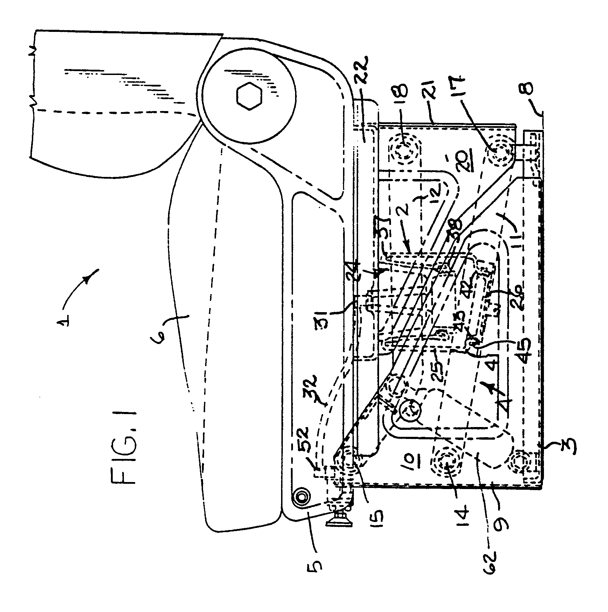

Referring now in more detail to the drawings and initially to Fig. 1, the vehicle seat, indicated generally at 1, is supported in a suspension system by a fluid spring indicated generally at 2. The vehicle seat 1 is useful in many different seating applications including, but not being limited to, truck and bus driver seats. The vehicle seat 1 includes a base frame 3, pivotal suspension arms 4, a seat frame 5 and a seat 6 mounted on top of the seat frame 5.

The base frame 3 is secured to the floor 8 of the vehicle. The base frame 3 includes an upstanding U-shape pivot support 9 having side plates 10 on each side of the seat 1. The pivotal support arms 4 include a lower suspension arm 11 and upper suspension arm 12 on each side of the vehicle seat 1. The lower and upper suspension arms 11 and 12 are respectively pivotally connected as indicated at 14 and 15 to the side plate 10 on each side of the seat. The other ends of each pair of lower and upper suspension arms 11 and 12 are respectively pivotally connected as indicated at 17 and 18 to the side plates 20 on downwardly extending support 21.

The support 21 is secured to seat frame 5 and extends downwardly therefrom. The seat frame 5 further includes a dished seat pan 22 mounted on the top thereof. The seat 6 is directly mounted on the seat pan 22, which provides clearance therebelow for enclosing air hoses and the like for air spring 2.

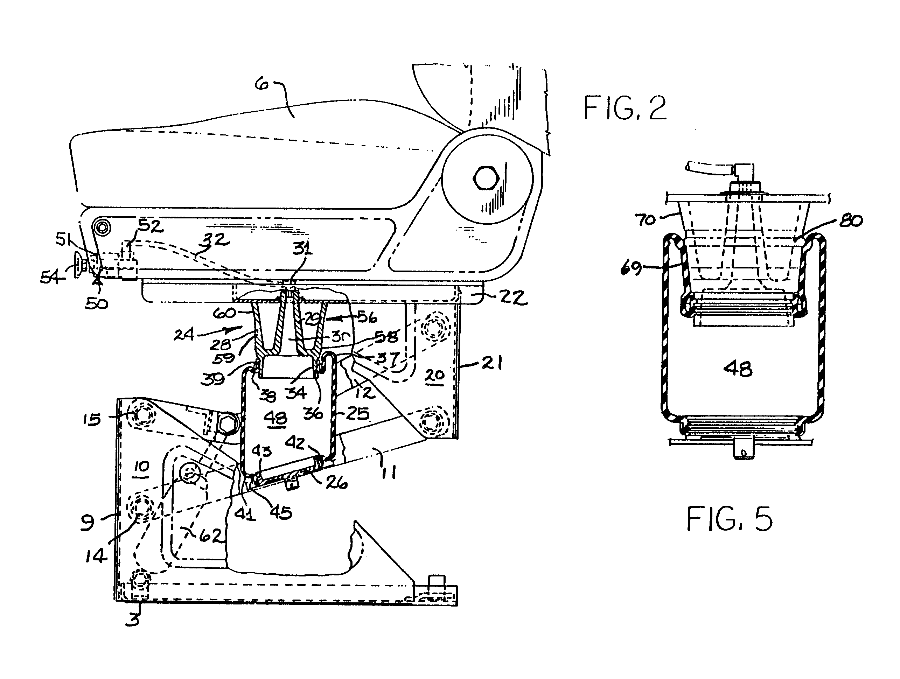

As best shown in Figs. 1 and 2, the air spring includes a piston, indicated generally at 24, a rolling lobe sleeve 25 and a plug 26. The rolling lobe flexible sleeve 25 extends between and is connected at its respective opposite ends to piston 24 and plug 26.

The piston 24 has an annular side wall 28 and a central air nipple 29 defining air passage 30. As shown, the piston 24 is mounted to the seat frame 5 with the nipple 29 extending therethrough. The upper end of nipple 29 has an L-shape coupling 31 thereon. An air hose 32 is connected at one end of coupling 31 and is connected at its other end to a source of compressed air.

The side wall 28 of piston 24 has an integrally formed annular mounting flange 34 therebelow. The radially outer side wall of flange 34 is provided with a plurality of annular grooves 36 to assist in holding the clamped upper end of sleeve 25.

To this end, the upper end of flexible tubular sleeve 25 is rolled over to form an annular upper sleeve lobe 37. The end of sleeve 25 is then bent back upon itself as indicated at 38 to receive an annular upper clamp ring 39. Clamp ring 39 is radially contracted tightly to hold the end of sleeve 25 against the outer surface of flange 34. By contracting ring 39, material of sleeve 25 is forced into the grooves 36 in the flange 34 to assist in tightly retaining the end of the sleeve 25 captured between the ring and flange.

At its other end, the rolling lobe tubular sleeve 25 is folded radially inwardly as indicated at 41 and is then bent at 42 to surround and be in engagement with the outer side wall 43 of plug 26. A lower clamping ring 45 is positioned around the lower end of the sleeve 25 and is radially contracted tightly to hold the sleeve against the plug side wall 43.

As shown, the plug 26 is mounted on and secured to the lower suspension are 11. The piston 24, flexible sleeve 25 and plug 26 cooperatively define air spring compartment 48. The air spring 2 with enclosed air compartment 48 extends between lower suspension arm 11 and seat frame 5. Compressed air may be added to or withdrawn from the enclosed air compartment 48 to inflate or deflate the spring.

To this end, an air control valve 50 may be mounted on the seat 1 in a location providing convenient access for the seat occupant. The air control valve 50 includes a coupling 51 connected to a supply of compressed air and an outlet 52 coupled to air supply hose 32. A control button 54 is provided on the air control valve 50 and can be operated by the seat occupant in conventional fashion either to supply compressed air through hose 32 to the air spring 2 or to vent compressed air from the air spring 2. This allows the seat occupant to adjust the seat 1 to the preferred height and degree of pressurization for desired seat feel.

When compressed air is supplied to air spring 2, the air spring will inflate with the tubular rolling lobe sleeve 25 being vertically extended. As the air spring is being inflated, the two pairs of arm supports 4 are pivoting about their respective pivotal connections between the base frame 3 and seat frame 5 resulting in the seat frame 5 vertically moving approximately two times more than the air spring moves. The spring rate of the air spring 2 during inflation, deflation or compression is controlled by the shape of the piston side wall 28.

As best shown in Figs. 1 and 2, the outer control surface 56 on the piston side wall 28 is positioned above the flange 34. The piston control surface 56 has a positive taper relative to the vertical from the end closest to the plug to the end remote from the plug. The term positive taper as used herein relates to a control surface having a composite radial expansion from the end closest to the plug to the end remote from the plug. The positive taper providing this radial expansion may include a number of segments having different degrees of taper relative to the vertical. In this context, discrete segments of the overall taper control surface 56 on piston side wall 28 could have a negative taper, no taper or a positive taper, as long as the overall composite taper of the entire control surface 56 is positive relative to the vertical. These specific respective tapers of the discrete segments are selected in any sequence to provide an air spring having a tuned or controlled spring rate during different portions of spring and seat travel.

In the preferred mode of the first embodiment, three discrete segments are provided on the piston control surface 56. The first relatively short segment 58 is substantially cylindrical in shape and thus has no taper relative to the vertical. The second segment 59 of the piston control surface 56 has a taper of 5° relative to the vertical. The third segment 60 of the piston control surface 56 has a taper of 10° relative to the vertical. The three segments are respectively blended into one another by radii to provide a smooth transition between the respective discrete segments. The respective tapers of these discrete segments are selected to provide specific spring characteristics during seat operation.

In this regard, beginning with the air spring in an inflated condition for normal operation as shown in Fig. 2, the control surface 56 is above the lobe 37 of flexible sleeve 25. Under normal load conditions on the seat, the seat frame will move relatively small vertical distances. With such movement, the piston 24 will begin to enter the confines of the tubular sleeve. This movement will initially result in the radially inner side of lobe 37 rolling along the cylindrical segment 58 of the tapered control surface 56. The cylindrical segment will not appreciably change the air pressure in the compartment 48 of air spring 2, thereby providing a relatively soft feel to the seat occupant in this normal operating range of the seat.

As seat loading increases, the rolling lobe 37 will begin to roll along the second tapered segment 59 of piston control surface 56. This further rolling lobe movement effectively shortens the vertical height of the air springs and brings second segment 59 of the control surface into air compartment 48 of air spring 2. This second segment with its 5° radially outward taper acts further to compress the air in the air compartment and increases effective piston size since the diameter of the sleeve 25 of air spring 2 does not appreciably change. As the second segment 59 progressively increases the pressure in the air compartment and the effective piston size, the downward movement of the seat is opposed by the progressively increasing pressure to slow or stop the downward movement of the seat.

Under severe seat loading caused by a large chuck hole or the like at high speeds, the seat frame will move downwardly to a sufficient extent that the rolling lobe is moving along the third segment 60 of the control surface 56. This third segment has a preferred taper of 10° thereby further to increase the pressure as it effectively enters the air compartment 48. This third tapered segment 60 is designed to increase the pressure within the compartment sufficiently fully to stop the downward movement of the seat frame before the piston physically bottoms out on the plug.

By smoothly progressively increasing the pressure of the air spring as the second and third segments of the piston control surface respectively enter the sleeve, and by increasing the effective size of the control surface to allow a given air pressure to support more weight, the occupant in the seat has a feeling of a smooth ride. This feeling is further enhanced by normally stopping the seat movement before the piston abruptly bottoms out on the plug.

When downward movement of the seat frame has been stopped, the compressed air in the compartment 48 will then restore spring 2 to its normal position. As the lobe unrolls and the piston advances upwardly out of the sleeve, the pressure in the air compartment 48 is gradually and smoothly decreased by the radially enlarged control surface segments leaving the effective compressed air volume.

By employing a positive taper with a segmented piston control surface, the vertical travel of the seat frame is normally reduced and a smoother ride is provided. This reduced vertical movement reduces abrasion on the rolling lobe tubular sleeve 25 during normal operation and during abnormal operation when bottoming out would normally occur. Moreover, this reduced vertical travel enhances the life of the shock absorber.

As shown in Fig. 1, a shock absorber 62 extends between and is connected at opposite ends to the base frame 3 and upper suspension arm 12. The shock absorber is used to absorb and control the energy created by the downward movement of the seat frame. With reduced travel of the seat frame, the stroke of the shock absorber is reduced to enhance its life. Moreover, the reduced vertical movement during air spring compression and expansion normally permits the shock absorber 62 to confine seat movement to one cycle, with the seat restored to its normal operating position at the end of that cycle. By reducing the propensity of the seat to rebound after the first cycle, the life of the shock absorber 62 is also further enhanced.

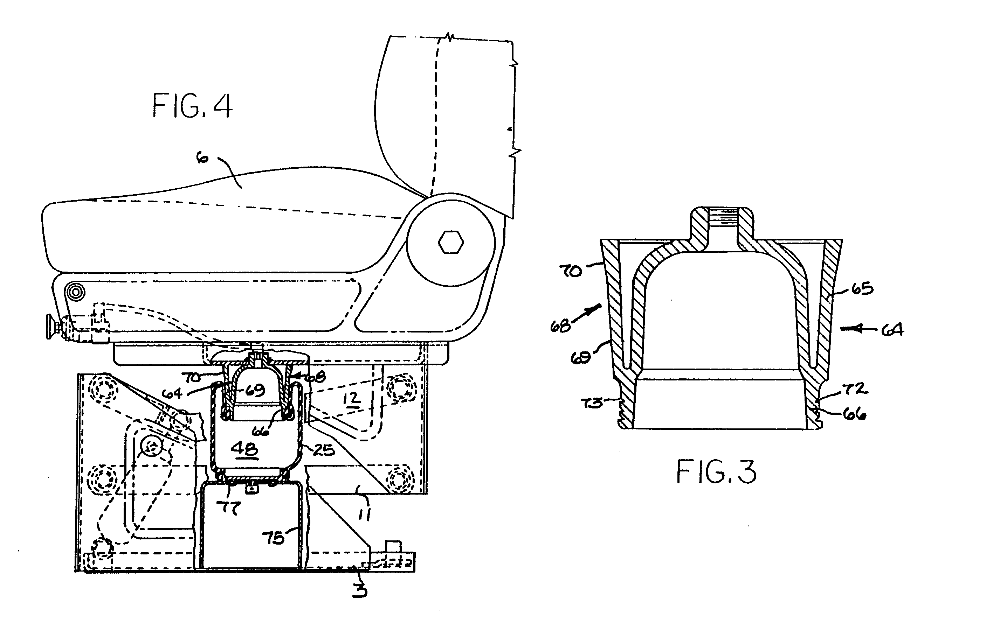

Referring now to Figs. 3 and 4 illustrating a second embodiment, the piston indicated generally at 64 includes a sidewall 65 and flange 66. The positive taper outer control surface on piston side wall 5 is indicated generally at 68. This positive taper outer control surface 68 includes two discrete segments of different taper. The first segment 69 has a taper of approximately 5° relative to the vertical. The first segment 69 blends into a second segment 70 on control surface 68. Segment 70 has a positive taper of approximately 10° relative to the vertical. The two segments 69 and 70 on control surface 68 have been selected to provide the desired spring characteristics for the air spring in the second embodiment.

The flange 66 on the piston of the second embodiment includes three annular grooves 72. The annular grooves have a saw tooth configuration defined by angled side walls 73. This saw tooth configuration may help in holding the upper end of the flexible tubular sleeve 25 on flange 66. The flexible material of the sleeve defined between the gripping ring and flange 66 is urged into the saw tooth grooves 72 to provide a bite into the material to assist in holding the sleeve in position.

Referring to Fig. 4, the air spring of the second embodiment may be positioned between the base and the seat frame. To this end, a riser 75 is mounted on the vehicle floor 76. The plug 77 of the air spring 2 is mounted on and secured to the riser 75. The piston 64 of the air spring 2 is connected to and extends downwardly from the seat frame 5. By positioning the air spring between the base and seat frame, a ratio of 1 to 1 is obtained between the vertical movements of the spring and seat. However, this positioning permits the seat to be operated with reduced pressures in the air compartment of the fluid spring. With the reduced operating range of pressures, the fluid air spring in this embodiment may be inflated by a hand pump rather than requiring the system air of the vehicle as in the first embodiment.

The piston has been shown as being mounted to the seat frame in both embodiments. This mounting is slightly easier to make with the air hose connections and control circuitry being in an enclosed area. However, the present invention also contemplates mounting the piston to the seat base or lower suspension arm and mounting the plug on the seat frame. In this orientation, the reduced diameter end of the piston control surface would be most closely adjacent to the plug with the enlarged diameter end of the positive taper control surface being remote from the plug. Similarly, the air spring of the present invention could also be mounted to extend between the base frame or floor and the upper pivotal suspension arm.

It will be apparent from the foregoing that changes may be made in the details of construction and configuration without department from the spirit of the invention as defined in the following claims. For example, as shown in Fig. 5, the tapered control surface may be provided with a radially outwardly extending rib 80. As the rib 80 enters the effective air volume 48, a sudden brief increase in pressure is experienced. This pressure spike can be used to activate a sensor on an auxillary control system. The position of the rib or ribs can be selected to provide desired feed back information on the degree of air spring compression.

## Claims

1. A fluid spring arrangement, comprising a piston (24) and base means (26) as well as a flexible sleeve (25) peripherically extending between said piston (24) and said base means (26), said piston (24), base means (26) and sleeve (25) defining a compartment (48) for a fluid medium, said base means (26) and said piston (24) being movable relative to each other said sleeve (25) thereby rolling along said piston (24), characterized by the fact that there is provided a control surface (56) along which said sleeve (25) rolls on said piston (24), said control surface (56) providing for a displacement volume per unit of displacement of said piston (24) relative to said base means (26) which rises as said piston (24) and base means (26) are moved towards each other, at least along a predetermined portion of such a movement.

2. A vehicle seat arrangement, having a fluid spring support, comprising a base frame (3) for attachment to the vehicle floor, a seat frame (5) supporting a seat and being at least vertically movable relative to said base frame (3); at least one fluid spring acting between said base frame (3) and said seat frame (5), said fluid spring including a piston (24) at one end , a base means (26) at its other end and a flexible sleeve (25) peripherically extending between said piston (24) and said base means (26), said sleeve (25) thereby rolling along said piston (24), said base means (26), said piston (24) and said sleeve (25) defining a compartment (48) for a fluid medium, characterized by the fact that there is provided a control surface (56) along which said sleeve (25) rolls on said piston (24) which provides for a displacement volume per unit of relative displacement of said piston (24) relative to said base means (26) which rises as said piston (24) and base means (26) are moved towards each other at least along a predetermined portion of such a movement.

3. The arrangement according to claim 1 or 2, said control surface being defined by a generally radially outwardly tapered surface of said piston (24), including at least two segments of different taper, seen from a first end of said piston , closest to said base means (26) towards a second end remote from said base means (26), said segmented radially varying taper resulting in a variable spring rate for said fluid spring in dependency to said rolling of said flexible sleeve (25) along said control surface, caused by vertical movement of said piston (24), relative to said base means (26) under load condition of said fluid spring.

4. The arrangement according to at least one of claims 1 to 3, wherein a fluid inlet extends through said piston (24) to said compartment (48).

5. The arrangement according to at least one of claims 2 to 4, comprising mechanical support means (11,12) extending between said base frame (3) and said seat frame (5) and being adapted to support said seat frame (5) for at least vertical movement related to said base frame (3), said mechanical support means including side arms (11,12) extending between said base frame (3) and said seat frame (5) and being respectively pivotably connected thereto at opposite ends.

6. The arrangement according to claim 5, wherein said fluid spring extends between and is connected to said side arms (11,12) and at least one of said seat frame (5) and said base frame (3).

7. The arrangement according to at least one of claims 2 to 6, wherein said piston (24) is connected to said seat frame (5).

8. The arrangement according to at least one of claims 2 to 6, wherein the fluid spring extends directly between and is connected to said base frame (3) and said seat frame (5).

9. The arrangement according to at least one of claims 3 to 8, wherein said segments of said surface of said piston (24) compositely describe an overall radially increasing taper, radially increasing from said first end to said second end of said piston (24).

10. The arrangement according to at least one of claims 1 to 9, said control surface including a sequence of different tapered segments.

11. The arrangement according to at least one of claims 1 to 10, said control surface comprising an annular rib (80) to provide for a pressure spike when said sleeve (25) rolls on a predetermined area of said control surface (56).

12. The arrangement according to at least one of the claims 1 to 12, said control surface comprising three segments with respective subsequent tapers of at least nearly 0°, 5° and 10° relative to a moving axis of said piston (24) relative to said base means (26).

13. The arrangement according to at least one of the claims 1 to 12, said control surface comprising two segments successively with tapers of at least nearly 5° and at least nearly 10° with respect to a displacement axis of said piston (24) relative to said base means (26).

FIG.1

EP 0 296 509 A2

FIG. 2

FIG. 5

FIG. 4

FIG. 3